# EUROPEAN PATENT SPECIFICATION

(11) **EP 0 416 701 B1**
(45) Date of publication and mention of the grant of the patent: **27.04.1994**
(21) Application number: 90202346.4
(22) Date of filing: 05.09.1990
(51) Int. Cl.: B60P 1/46

(54) **Load lifting device in particular for a truck**
Lasthebegerät, insbesondere für einen Lastwagen
Dispositif de levage d'une charge, notamment pour un camion

(30) Priority: 06.09.1989 BE 8900952
(43) Date of publication of application: 13.03.1991
(73) Proprietor: SOLID b.v.b.a., B-2360 Oud-Turnhout (BE)
(72) Inventor: Nuyts, Karolus Maria Leopoldus, B-2360 Oud-Turnhout (BE); Nuyts, Henry Catherina, B-2360 Oud-Turnhout (BE)
(74) Representative: Lips, Hendrik Jan George, Ir.

(56) References cited:
- EP-A- 0 373 702
- BE-A- 890 448
- CA-A- 1 059 954
- GB-A- 2 040 866
- GB-A- 2 106 857

## Description

The invention relates to a load lifting device in particular for a truck, said device comprising: a pair of substantially upright columns which can be in a stationary position in respect of the body of the truck; a slide being movable along said columns; a platform being mounted to said slide such that it can be pivoted in respect of said slide around an axis running parallel to the plane of said columns and perpendicular to the longitudinal direction of said columns, means being present for moving said slide in respect of said columns.

Such a load lifting device is known by EP-A-0 373 702. In case of this known device the platform is mounted to the lower end of the slide so that the platform can be lowered till the ground on which the related truck is standing. By this, however, the height till which the platform can be raised is limited.

Now the invention aims to overcome this disadvantage and to that end it is provided that said platform comprises two sections: a base section being pivotally mounted to said slide and a carrying section being pivotally mounted to said base section, the pivot axis between base section and carrying section running parallel to and spaced from the pivot axis between base section and slide, such that when the device is used at least a part of the carrying section is directed from the pivot axis between base section and carrying section towards the upright columns of the device, means being present to adjust either to bring or to block both sections in the desired position in respect of the slide.

By the embodiment of the platform described above it is possible to pivot the base section such that it extends obliquely upwardly from the pivot axis between said base section and the slide while the carrying section is in its horizontal position such that it may carry a load.

Obviously the supporting surface of the carrying section can be brought at a considerable distance above the lowest point of the slide such that the load can be delivered at a much higher point than in case of the known device.

According to a preferred embodiment the base section and the carrying section, as seen in a direction perpendicular to the pivot axes, are dimensioned such that when the base section is obliquely running upwardly from the slide and the carrying section is in its horizontal position, the free edge of the latter, running parallel to its pivot axis, will be present near the slide.

In this way it can be obtained that the carrying section is closely positioned near the cargo-supporting surface of the cargo space of the truck, so that the cargo can easily be brought onto said carrying section.

Nevertheless it might be possible that the dimensions of the base section and the carrying section, in the above mentioned direction, are substantially equal. In such a case the free edge of the carrying section may extend between the columns of the device and into the cargo space when the base section is obliquely running upwardly from the slide. When the device is used the angle between the base section and the columns may be between 75° and 45°.

A simple locking of the carrying section in the horizontal position when the base section is obliquely running upwardly from the slide, can be obtained by releasable fixing the free edge of the carrying section to the slide.

In this way a very stable positioning of the carrying section is obtained. The device being then particularly suitable for bringing cargo from the supporting surface of the cargo space of the truck onto the carrying section and by this upwardly by moving the slide.

In case of this embodiment it might be possible to bring the base section and the carrying section manually in the desired position after which the connection between the carrying section and the slide is effected.

When the device needs no longer to be used, the connection is released, the base section is moved to its horizontal position and the carrying section is positioned on it, after which the system is brought to its vertical position when the truck has to be moved.

Obviously the system of base section and carrying section may form the door of the rear wall of the truck as this is known per se.

Preferably the carrying section can be positioned such that it is lying in the same plane as the base section, in which case the base section will mainly consist of two spaced beams extending perpendicular to the pivot axes, said beams near the slide being connected to each other such as by means of said slide.

When, however, the length of the carrying section, as seen in a direction perpendicular to its pivot axis, is smaller than the length of the base section, a plate shaped element will be provided between said beams near the slide for bridging the distance between the free edge of the carrying section and said slide.

Said plate-shaped element then can be used as stiffening element for said base section.

Further the possibility exists that the pivot axis between the base section and the carrying section is spaced from both free edges of the carrying section, which edges are running parallel to the pivot axis of said carrying section.

This means that when e.g. the base section and the carrying section are both in the horizontal position, the carrying section will extend beyond the pivot axis between both sections as seen from the rear of the truck.

In most cases it will be preferred that pivoting the base section and the carrying section is obtained by mechanically, pneumatically, hydraulically or electrically operated means. Such means normally will have to be used for bringing the slide and so the platform upwardly.

To extend the field of application of the device as much as possible, it might be provided that control means are present for controlling the position of the carrying section such that the cargo-supporting surface of this remains horizontally during pivoting the base section.

Now the invention is described by means of embodiments shown in the drawing, in which:
Fig. 1 shows part of a side view of a truck provided with a load lifting device according to the present invention in the non-use position;
Fig. 2 shows a rear view of the truck of Fig. 1;
Fig. 3 shows a side view according to Fig. 1 of a first embodiment of the device when this is brought into the operative condition;
Fig. 4 shows a side view according to Fig. 3 with the device in the operative condition and with the carrying section in the position that cargo can be brought from the cargo space of the truck onto the carrying section or vice versa;
Fig. 5 shows a side view according to Fig. 4 but with the loading platform in the raised position;
Fig. 6 shows a side view according to Fig. 1 of a second embodiment of a device according to the invention with the loading platform in an operative position and with the slide in the lowest position;
Fig. 7 shows a side view according to Fig. 6 but with the slight in a raised position;
Fig. 8 shows a side view according to the Figs. 6 and 7 but with the platform sections in another position;
Fig. 9 shows a side view according to Fig. 3 but with the platform sections more in detail;
Fig. 10 shows a side view according to Fig. 9 but from another embodiment of the platform sections;
   and
Fig. 11 shows a side view according to the Figs. 9 and 10 but from still another embodiment of the platform sections.

In the Figures a part of truck 1 is shown comprising the body 2 defining the cargo space 3 with its supporting surface or floor 4.

On the rear side of the truck 1 a load lifting device 5 according to the invention is mounted. Said load lifting device comprises two upright columns 6 along which a slide 7 can be moved in vertical direction. The columns 6 can be fixedly mounted to the body 2 and to the rear bumper 8 of the truck but of course it is possible that the columns are mutually connected to obtain an assembly being movable as such as this is described in the above mentioned European patent application.

The slide 7 is of a construction known per se and so is not described in detail. Means, not shown in the drawing, will be present to move the slide 7 upwardly and downwardly.

The slide 7 is provided with lugs 9 for supporting a pivot shaft 10 forming the pivot axis between said slide and a base section 11 of the platform assembly 12. The base section 11 supports a shaft 13 which in its turn supports the carrying section 14 of the platform assembly 12.

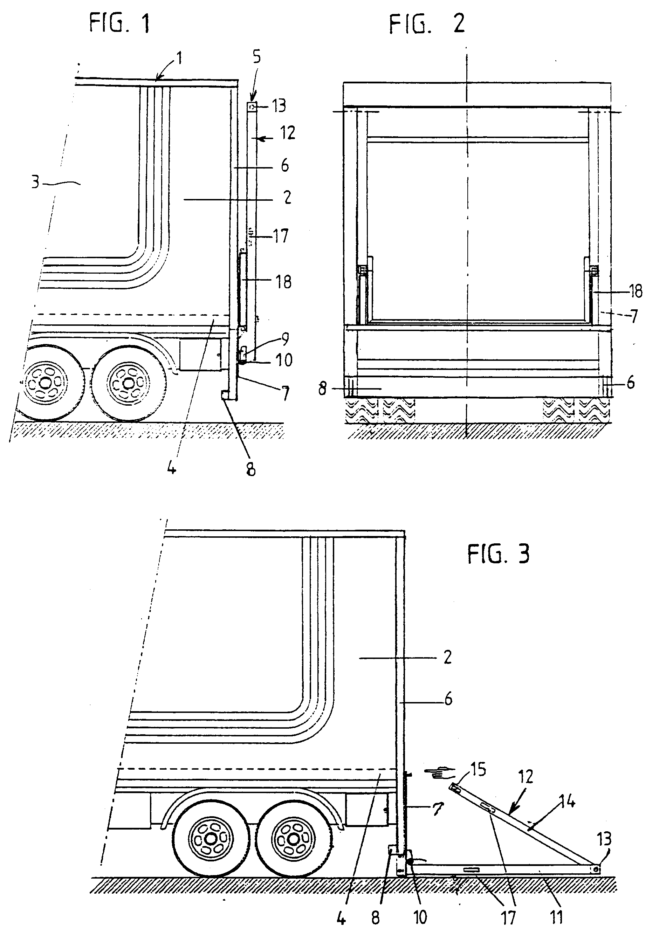

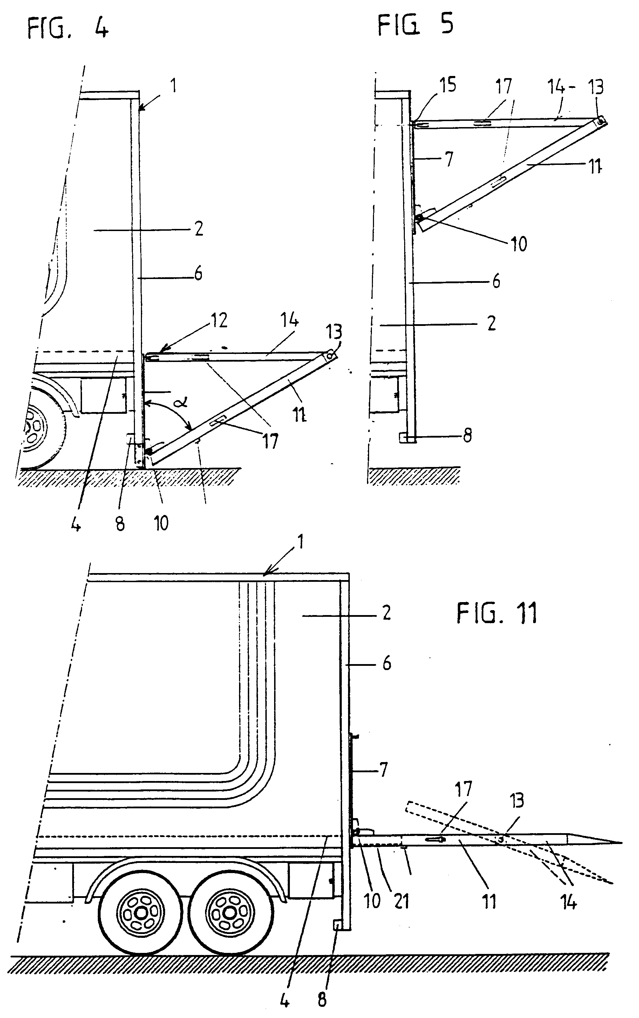

In case of the embodiment according to the Figs. 3-5 the base section 11 and the carrying section 14 are dimensioned such that the free edge 15 of the carrying section can be releasable connected to the upper edge of the slide 7 so that the carrying section can take the position as shown in the Figs. 4 and 5. The connection can be obtained by some hooks which are received in lugs. This, however, is not shown in detail. The angle α between the slide 7 and the base section 11 may be between 75° and 45°.

In Fig. 4 the slide 7 is in its lowest position and the carrying section 14 then is positioned such that the supporting surface of it is substantially smooth with the supporting surface of the floor 4 of the truck 1. In this position a load can be brought from the floor 4 onto the carrying section 14 so that this load can be brought upwardly to the position shown in Fig. 5 or vice versa.

When the device needs no longer be used, the edge 15 will be released from the slide 7 and the carrying section 14 will be pivoted towards the base section 11 after which said sections will be locked by the means 17 which are not shown in detail. Then the platform assembly 12 can be brought in the position as shown in the Figs. 1 and 2 either manually or by means of a pressurized medium cylinder 18 as indicated in said Figures. Said cylinder is then connected between the slide 7 and the base section 11.

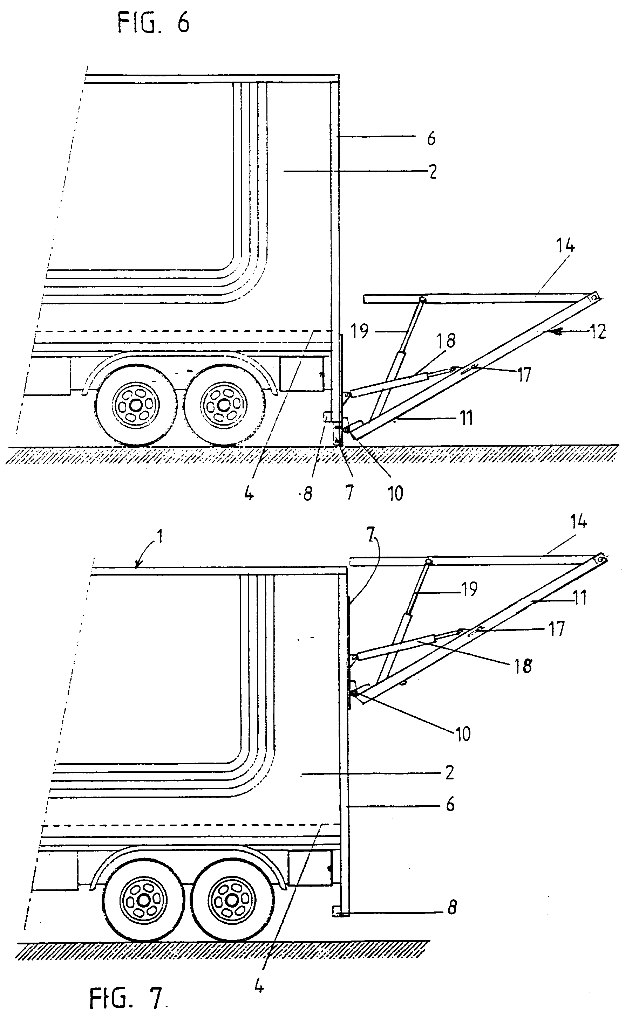

The Figs. 6-8 are showing an embodiment, comprising mainly the same parts as the embodiment according to the Figs. 3-5 and the same parts are indicated with the same reference numbers.

In case of the embodiment according to the Figs. 6-8, however, a further pressurized medium cylinder 19 is present between the base section 11 and the carrying section 14 so that, as appears from Fig. 7, the supporting surface of the carrying section 14 can be brought further upwardly and even above the highest point of the body 2 of the truck 1.

In case of this embodiment locking means may be present to lock the base section and carrying section in respect of the slide 7 in the position shown in the Figs. 6 and 7, but also control means, not shown, can be used to take care for it that the carrying section 14 remains always in its horizontal position when the load lifting device is used.

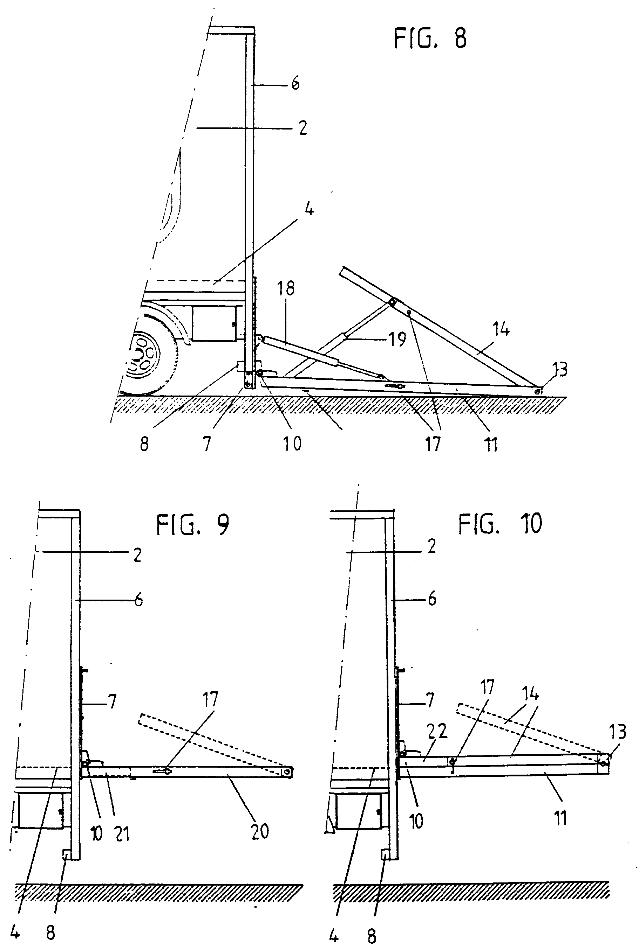

Fig. 9 shows an embodiment of the base section 11 and of the carrying section 14 in which said base section 11 comprises two beams 20 extending from the pivot shaft 10 and being connected with each other by means of a substantially plate-shaped element 21 extending over a limited portion of the length of the beams 20 only.

The carrying section 14 is dimensioned such that it is comprised between the beams 20 and extends from the pivot shaft 13 till the plate-shaped element 21. In this way the upper surfaces of the plate-shaped element 21 and of the carrying section 14 are lying in one plane.

Fig. 10 shows a somewhat other possibility according to which the base section 11 extends below the carrying section 14 and is provided with a part 22 to obtain again one continuous load-supporting surface.

Finally Fig. 11 shows the possibility that the carrying section 14 extends itself beyond the pivot shaft 13 which in some instances might be useful when working with the device.

Obviously in this case the carrying section can be mounted in the same way as indicated in Fig. 10 and many further modifications and combinations can be applied without leaving the inventive concept.

## Claims

1. Load lifting device in particular for a truck (1), said device comprising: a pair of substantially upright columns (6) which can be in a stationary position in respect of the body (2) of the truck; a slide (7) being movable along said columns (6); a platform (12) being mounted to said slide (7) such that it can be pivoted in respect of said slide around an axis (10) running parallel to the plane of said columns and perpendicular to the longitudinal direction of said columns, means being present for moving said slide (7) in respect of said columns (6),
characterized in
that said platform (12) comprises two sections: a base section (11) being pivotally mounted to said slide and a carrying section (14) being pivotally mounted to said base section, the pivot axis (13) between base section and carrying section running parallel to and spaced from the pivot axis (10) between base section and slide, such that when the device is used at least a part of the carrying section is directed from the pivot axis (13) between base section and carrying section towards the upright columns (6) of the device, means being present to adjust either to bring or to block both sections in the desired position in respect of the slide (7).

2. Load lifting device according to claim 1,
characterized in
that the base section (11) and the carrying section (14), as seen in a direction perpendicular to the pivot axes (10,13) are dimensioned such that when the base section is obliquely running upwardly from the slide and the carrying section is in its horizontal position, the free edge (15) of the latter, running parallel to its pivot axis (13), will be present near the slide (7).

3. Load lifting device according to claim 1 or 2,
characterized in
that when the device is used the angle (α) between the base section (11) and the columns (6) may be between 75° and 45°.

4. Load lifting device according to one of the preceding claims,
characterized in
that when the base section (11) is obliquely running upwardly from the slide (7) and the carrying section (14) is in its horizontal position the free edge (15) of the latter is releasably fixed to the slide (7).

5. Load lifting device according to one of the preceding claims,
characterized in
that the carrying section (14) can be positioned such that it is lying in the same plane as the base section (11), said base section mainly consisting of two spaced beams (20) extending perpendicular to the pivot axes (10,13), said beams near the slide (7) being connected to each other such as by means of said slide (7).

6. Load lifting device according to claim 5,
characterized in
that the length of the carrying section (14), as seen in a direction perpendicular to its pivot axis (13) is smaller than the length of the base section (11), a plate shaped element (21) being provided between said beams (20) near the slide (7) for bridging the distance between the free edge of the carrying section (14) and said slide (7).

7. Load lifting device according to one of the preceding claims,
characterized in
that the pivot axis (13) between the base section (11) and the carrying section (14) is spaced from both free edges of the carrying seciton (14), which edges are running parallel to the pivot axis (13) of said carrying section (14).

8. Load lifting device according to one of the preceding claims,
characterized in
that pivoting the base section (11) and the carrying section (14) is obtained by mechanically, pneumatically, hydraulically or electrically operated means.

9. Load lifting device according to claim 8,
characterized in
that control means are present for controlling the position of the carrying section (14) such that the cargo supporting surface of this remains horizontally during pivoting the base section (11).

## Patentansprüche

1. Lasthebegerät, insbesondere für einen Lastwagen (1), wobei das Gerät umfaßt: ein Paar im wesentlichen aufrechter Säulen (6), welche in einer stationären Position bezüglich der Karosserie (2) des Lastwagens sein können, einen Schlitten (7), der entlang der Säulen (6) bewegbar ist, eine Plattform (12) die an dem Schlitten (7) so angebracht ist, daß sie bezüglich des Schlittens um eine Achse (10) geschwenkt werden kann, die parallel zur Ebene der Säulen und senkrecht zur Längsrichtung der Säulen verläuft, und Mittel zum Bewegen des Schlittens (7) bezüglich der Säulen (6),
**dadurch gekennzeichnet,**
daß die Plattform (12) zwei Abschnitte aufweist: einen Grundabschnitt (11), der schwenkbar an dem Schlitten angebracht ist, und einen Trageabschnitt (14), der schwenkbar an dem Grundabschnitt angebracht ist, wobei die Schwenkachse (13) zwischen Grundabschnitt und Trageabschnitt sich parallel zu und beabstandet von der Schwenkachse (10) zwischen Grundabschnitt und Schlitten derart erstreckt, daß bei Benutzung des Gerätes zumindest ein Teil des Trageabschnitts von der Schwenkachse (13) zwischen Grundabschnitt und Trageabschnitt zu den aufrechten Säulen (6) des Gerätes hin gerichtet ist, wobei Mittel zum Einstellen beider Abschnitte entweder in die gewünschte Position zum Schlitten (7) oder zum Blockieren in derselben vorhanden sind.

2. Lasthebegerät nach Anspruch 1, dadurch gekennzeichnet, daß der Grundabschnitt (11) und der Trageabschnitt (14) in einer Richtung senkrecht zu den Schwenkachsen (10, 13) betrachtet so bemessen sind, daß, wenn der Grundabschnitt von dem Schlitten schräg aufwärts läuft und der Trageabschnitt in seiner horizontalen Stellung ist, das freie Ende (15) des letzteren, das parallel zu seiner Schwenkachse (13) verläuft, sich nahe am Schlitten (7) befindet.

3. Lasthebegerät nach Anspruch 1 oder 2, dadurch gekennzeichnet, daß bei Benutzung des Geräts der Winkel (α) zwischen dem Grundabschnitt (11) und den Säulen (6) zwischen 75° und 45° betragen kann.

4. Lasthebegerät nach einem der vorangegangenen Ansprüche, dadurch gekennzeichnet, daß, wenn der Grundabschnitt (11) schräg vom Schlitten (7) aufwärts läuft und der Trageabschnitt (14) in seiner horizontalen Stellung ist, das freie Ende (15) des letzteren lösbar an dem Schlitten (7) befestigt ist.

5. Lasthebegerät nach einem der vorangegangenen Ansprüche, dadurch gekennzeichnet, daß der Trageabschnitt (14) so positioniert ist, daß er in derselben Ebene wie der Grundabschnitt (11) liegt, wobei der Grundabschnitt hauptsächlich aus zwei beabstandeten Trägern (20) besteht, die sich senkrecht zu den Schwenkachsen (10, 13) erstrecken, wobei die Träger nahe dem Schlitten (7) miteinander verbunden sind, beispielsweise durch Teile des Schlittens (7).

6. Lasthebegerät nach Anspruch 5, dadurch gekennzeichnet, daß die Länge des Trageabschnitts (14) in einer Richtung senkrecht zu seiner Schwenkachse (13) betrachtet kleiner ist als die Länge des Grundabschnitts (11), wobei ein plattenförmiges Element (21) zwischen den Trägern (20) nahe dem Schlitten (7) vorgesehen ist, um den Abstand zwischen dem freien Ende des Trageabschnitts (14) und dem Schlitten (7) zu überbrücken.

7. Lasthebegerät nach einem der vorangegangenen Ansprüche, dadurch gekennzeichnet, daß die Schwenkachse (13) zwischen dem Grundabschnitt (11) und dem Trageabschnitt (14) von beiden freien Enden des Trageabschnitts (14) beabstandet ist, wobei die Enden parallel zu der Schwenkachse (13) des Trageabschnitts (14) verlaufen.

8. Lasthebegerät nach einem der vorangegangenen Ansprüche, dadurch gekennzeichnet, daß das Schwenken des Grundabschnitts (11) und des Trageabschnitts (14) durch mechanisch, pneumatisch, hydraulisch oder elektrisch betriebene Mittel bewirkt wird.

9. Lasthebegerät nach Anspruch 8, dadurch gekennzeichnet, daß Steuermittel vorgesehen sind zum Steuern der Stellung des Trageabschnitts (14) derart, daß die die Last tragende Oberfläche desselben währernd des Schwenkens des Grundabschnitts (11) horizontal bleibt.

## Revendications

1. Dispositif de levage d'une charge, notamment pour un camion (1), ce dispositif comprenant : deux montants pratiquement verticaux (6) pouvant se trouver dans une position fixe par rapport à la carrosserie (2) du camion; un coulisseau (7) mobile le long des montants (6); une plate-forme (12) montée sur le coulisseau (7) de façon à pouvoir pivoter par rapport au coulisseau autour d'un axe (10), parallèle au plan des montants et perpendiculaire à la direction longitudinale des montants, des moyens étant prévus pour déplacer le coulisseau (7) par rapport aux montants (6), caractérisé en ce que
ladite plate-forme (12) comprend deux sections : une section de base (11) montée, pivotante, sur le coulisseau, et une section portante (14) montée, pivotante, sur la section de base, l'axe de pivotement (13) entre la section de base et la section portante étant parallèle à l'axe de pivotement (10) entre la section de base et le coulisseau, en en étant espacé, de telle sorte que, lorsque le dispositif est en service, au moins une partie de la section portante est dirigée de l'axe de pivotement (13) entre la section de base et la section portante en direction des montants verticaux (6) du dispositif, des moyens de réglage étant prévus, soit pour amener, soit pour bloquer les deux sections dans la position désirée par rapport au coulisseau (7).

2. Dispositif de levage d'une charge selon la revendication 1, caractérisé en ce que, vues dans une direction perpendiculaire aux axes de pivotement (10,13), la section de base (11) et la section portante (14) sont dimensionnées de telle sorte que, lorsque la section de base s'étend en oblique vers le haut depuis le coulisseau et que la section portante est dans sa position horizontale, le bord libre (15) de cette section portante, parallèle à son axe de pivotement (13), se trouve à proximité du coulisseau (7).

3. Dispositif de levage d'une charge selon la revendication 1 ou la revendication 2, caractérisé en ce que, lorsque le dispositif est en service, l'angle (α) entre la section de base (11) et les montants (6) peut être compris entre 75 et 45°.

4. Dispositif de levage d'une charge selon l'une des revendications précédentes, caractérisé en ce que, lorsque la section de base (11) s'étend en oblique vers le haut depuis le coulisseau (7) et que la section portante (14) est dans sa position horizontale, le bord libre (15) de cette dernière est fixé de façon amovible sur le coulisseau (7).

5. Dispositif de levage d'une charge selon l'une des revendications précédentes, caractérisé en ce que la section portante (14) peut être positionnée de façon à se trouver dans le même plan que la section de base (11), cette section de base étant principalement constituée par deux poutres espacées (20) perpendiculaires aux axes de pivotement (10,13), ces poutres étant reliées l'une à l'autre au voisinage du coulisseau (7), par exemple au moyen dudit coulisseau (7).

6. Dispositif de levage d'une charge selon la revendication 5, caractérisé en ce que, vue dans une direction perpendiculaire à son axe de pivotement (13), la section portante (14) est plus courte que la section de base (11), un élément en forme de plaque (21) étant prévu entre les poutres (20) au voisinage du coulisseau (7) pour recouvrir la distance entre le bord libre de la section portante (14) et le coulisseau (7).

7. Dispositif de levage d'une charge selon l'une des revendications précédentes, caractérisé en ce que l'axe de pivotement (13) entre la section de base (11) et la section portante (14) est espacé des deux bords libres de la section portante (14), lesquels bords s'étendent parallèlement à l'axe de pivotement (13) de la section portante (14).

8. Dispositif de levage d'une charge selon l'une des revendications précédentes, caractérisé en ce que le pivotement de la section de base (11) et de la section portante (14) est obtenu grâce à des moyens à commande mécanique, pneumatique, hydraulique ou électrique.

9. Dispositif de levage d'une charge selon la revendication 8, caractérisé en ce qu'il est prévu des moyens de commande pour commander la position de la section portante (14) de façon que la surface porte-charge de celle-ci reste horizontale pendant le pivotement de la section de base (11).
